# EUROPEAN PATENT APPLICATION

(11) **EP 2 741 127 A2**
(43) Date of publication of application: **11.06.2014**
(21) Application number: 12830643.8
(22) Date of filing: 22.08.2012
(51) Int. Cl.: G02F 1/1333, G02F 1/1335

(54) **METHOD FOR MANUFACTURING CURVED-SURFACE DISPLAY**

(30) Priority: 05.09.2011 KR 20110089800
(71) Applicant: Tovis Co., Ltd., Yeonsu-gu, Incheon 406-840 (KR)
(72) Inventor: KIM, Yong-Beom, Incheon 406-840 (KR)
(74) Representative: Manitz, Finsterwald & Partner GbR
(86) International application number: PCT/KR2012/006666
(87) International publication number: WO 2013/035996

(57) **Abstract**

A method for manufacturing a curved-surface display having a desired curved shape using a flat display panel having a first substrate and a second substrate includes: paring partially outer surfaces of the first substrate and the second substrate so as to reduce thicknesses thereof to a predetermined thickness; attaching a polarizer on at least one of the pared outer surfaces of the first substrate and the second substrate; and attaching a reinforcing plate having the same shape with the desired curved shape and light transmitting characteristics to the display panel using an optically clear adhesive layer which is formed on an outer surface of the polarizer so as to fill the pared portion.

## Description

### [Technical Field]

The present invention relates to a method for manufacturing a curved-surface display for manufacturing a display panel having a curved-surface shape.

### [Background Art]

Various display devices have been developed and are being used. A liquid crystal display device which realizes images using liquid crystal is widely used.

Generally, a liquid crystal display (LCD) includes two display panels and a liquid crystal layer disposed therebetween and having a dielectric anisotropy. An electric filed is formed in the liquid crystal layer, and a transmittance of light passing the liquid crystal layer is regulated by regulating amplitude of the electric field so as to obtain a desired image. Such a liquid crystal display is representative one of a flat panel display (FPD), and TFT-LCD which uses thin film transistor (TFT) as a switching element is widely used.

A plurality of display signal lines i.e., gate lines and data lines, a plurality of thin film transistors and pixel electrodes are formed on a lower display panel of the two display panels of the liquid crystal display panel, and a color filter and a common electrode are formed on a upper display panel.

Such a liquid crystal display panel is generally manufactured in a flat shape, so the conventional liquid crystal display panel cannot be used as a curved display.

In order to solve this problem, a flexible liquid crystal display panel which has flexible substrates instead of glass substrates of a conventional liquid crystal display panel so as to be bent by external bending force has been developed.

However, there is a problem that the manufacturing process of the conventional flexible liquid crystal display panel is difficult and the manufacturing cost thereof is high.

### [Detailed Description of the Invention]

### [Technical Problem]

The present invention has been made in an effort to provide a curved-surface display panel fabrication method which can produces a display panel having a curved shape through a simple process using a conventional flat display panel.

### [Technical Solution]

In an embodiment of the present invention, a method for manufacturing a curved-surface display having a desired curved shape using a flat display panel having a first substrate and a second substrate includes: paring partially outer surfaces of the first substrate and the second substrate so as to reduce thicknesses thereof to a predetermined thickness; attaching a polarizer on at least one of the pared outer surfaces of the first substrate and the second substrate; and attaching a reinforcing plate having the same shape with the desired curved shape and light transmitting characteristics to the display panel using an optically clear adhesive layer which is formed on an outer surface of the polarizer so as to fill the pared portion.

The method for manufacturing a curved-surface display may further include forming a protecting edge cover which covers edges of the first substrate and the second substrate.

### [Advantageous Effects]

According to the present invention, outer surfaces of the first substrate and the second substrate of a conventional flat display panel are partially removed to reduce the thicknesses thereof and then a polarizer is attached in a state that the display panel is bent to maintain the curved shape and then a reinforcing plate is attached using a optically clear adhesive to maintain the curved shape, so the curved display panel can be fabricated through simple process.

### [Brief Description of Drawings]

FIG. 1 is a schematic perspective view of a curved display panel formed by a method for manufacturing a curved-surface display according to an embodiment of the present invention.
FIG. 2 is a cross sectional view taken along a line II-II in FIG. 1.
FIG. 3 is a drawing for explaining a process of partially removing outer surfaces a flat display panel in a method for manufacturing a curved-surface display according to an embodiment of the present invention.
FIG. 4 is a drawing for explaining a process of attaching polarizers at outer surfaces of a display panel in a method for manufacturing a curved-surface display according to an embodiment of the present invention.
FIG. 5 is a drawing for explaining a process of forming an optically clear adhesive layer on the outer surface of a display panel in a curved-surface display panel fabrication method according to an embodiment of the present invention.
FIG. 6 is a drawing for explaining a process of attaching reinforcing plates on outer surfaces of a display panel in a method for manufacturing a curved-surface display according to an embodiment of the present invention.
FIG. 7 is a drawing for explaining a method for manufacturing a curved-surface display according to another embodiment of the present invention.

### [Detailed Description of the Embodiments]

Embodiments of the present invention will now be described hereinafter with reference to the accompanying drawings.

A method for manufacturing a curved-surface display according to the present invention relates to a method which forms a display panel having a desired curved-surface shape using a conventional flat display panel having two substrates facing one another. For example, the display panel having a desired curved-surface shape can be fabricated from a liquid crystal display panel which includes two substrates facing one another and a liquid crystal layer formed therebetween. A method for manufacturing a curved-surface display using a liquid crystal display panel will be explained.

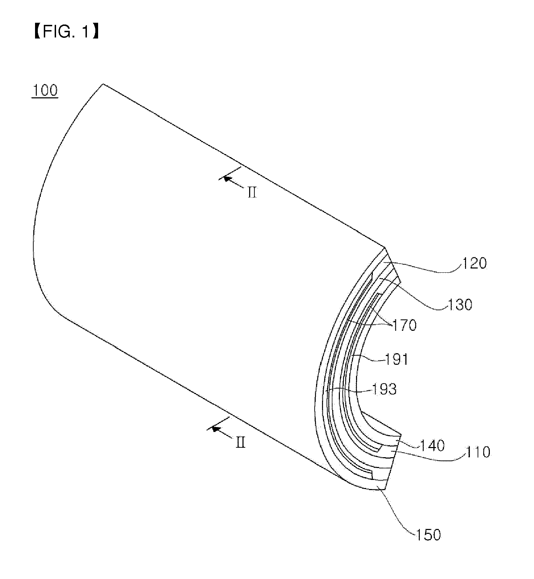

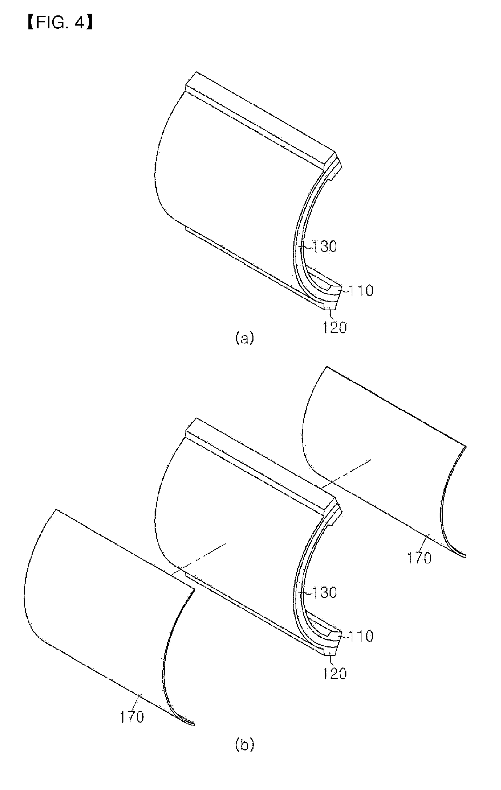

As shown in FIG. 1 to FIG. 6, a method for manufacturing a curved-surface display panel according to an embodiment of the present invention forms a display panel having a desired curved-surface shape using a flat display panel 100a (referring to FIG. 4) having a first substrate 110 and a second substrate 120 facing each other and a liquid crystal layer 130 having liquid crystals aligned in a vertical or parallel direction with respect to the two substrates 110 and 120.

The first substrate 100 may be referred to as a thin film transistor array substrate, and the second substrate 120 may be referred to as a color filter array substrate.

Meanwhile, not shown in the drawing, at edges of the two substrates 110 and 120, a sealant which is made of material for bonding the two substrates 110 and 120 and forms a space which is filled with liquid crystal may be disposed, and the liquid crystal is prevented from being leaked by the sealant.

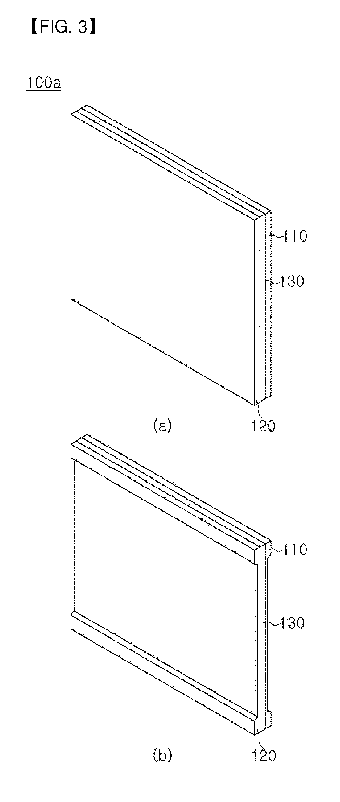

A method for manufacturing a curved-surface display panel according to an embodiment of the present invention will be explained hereinafter in detail with reference to FIG. 3 to FIG. 6.

A method for manufacturing a curved-surface display panel according to an embodiment of the present invention includes paring partially outer portions of the first substrate 110 and the second substrate 120 respectively so as to reduce thicknesses thereof to predetermined thicknesses. That is, as shown in (a) of FIG. 3, by removing outer surfaces of the first substrate 110 and the second substrate 120 of the conventional flat type liquid crystal display panel 100a, a shape of (b) of FIG. 3 is obtained.

At this time, in the step of paring outer portions ((a) to (b) in FIG. 4), a method of paring the first substrate 110 and the second substrate 120 may be any one of methods known in the art. For example, it may be a mechanical polishing method or an etching method using etchant.

When the outer portion of the first substrate 110 and the second substrate 120 are pared, edge portions which are not bent in the desired curved shape may not be removed. That is, as shown in (b) of FIG. 4, the upper and lower portions of the first substrate 110 and the second substrate 120 may be not pared. This may protect the driving circuits such as PCB(Printed Circuit Board) to which a driver for driving the liquid crystal panel and various circuit elements are connected may be connected to the upper and lower edges of the substrates. In addition, not paring the upper and lower edges of the substrates, the upper and lower edge portions may play a role of a guide for members which will be attached in the subsequent processes, and may play a role of enhancing the structural strength of the curved-surface display.

The desired curved shape may be a round bracket or a curve shape without an inflection point as shown in FIG. 1 to FIG. 3, and may be an S-shaped curve or a curve shape having one or more inflection points. That is, the desired curved shape may be variously altered.

Further, in the paring step (from (a) to (b) of FIG. 4), the predetermined thickness may be within a range of 50 to 150µm. If the thicknesses of the first substrate 110 and the second substrate 120 after being pared is less than 50µm or greater than 150µm, they may be broken during being bent or may be difficult to be bent. That is, since the thickness of the first substrate 110 and the second substrate 120 after being pared is between 50 to 150µm, the first substrate 110 and the second substrate 120 can be bent without being broken.

Meanwhile, a method for manufacturing a curved-surface display according to an embodiment of the present invention may include a step of attaching one or more polarizers 170 on at least one of the pared outer surfaces of the first substrate 110 and the second substrate 120. At this time, in a state that the polarizer 170 is bent to a desired curved-surface shape, the display panel is bent and then is attached to the polarizer 170, and in a state that the display panel is bent by attaching an bendable auxiliary film on a side opposite a surface to which the polarizer 170 will be attached, the polarizer 170 can be attached.

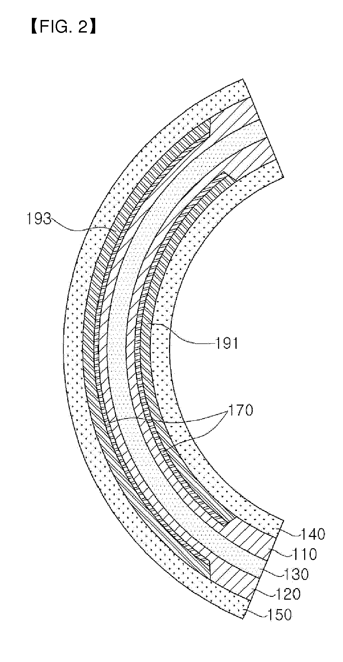

As shown in FIG. 2 and FIG. 4, the polarizer 170 can be attached to the pared outer surfaces of the first substrate 110 and the second substrate 120 respectively, but can be attached to only one of the outer surfaces of the first substrate 110 and the second substrate 120.

In addition, a method for manufacturing a curved-surface display panel according to an embodiment of the present invention includes attaching reinforcing plates 140 and 150 with light transparent characteristics having the same shape with the desired curved-surface shape to the display panel 100a using optically clear adhesive layers 191 and 193 in a state of bending the display panel 100a outer surfaces of which are partially pared in a desired curved-surface shape. The optically clear adhesive layers 191 and 193 is formed outside the polarizer 170 and is formed to fill the pared portion of the substrates 110 and 120. At this time, although the optically clear adhesives layers 191 and 193 and the reinforcing plates 140 and 150 are shown to be provided respectively on both outer surfaces of the first substrate 110 and the second substrate 120 in the drawing, the optically clear adhesives layers 191 and 193 and the reinforcing plates 140 and 150 may be formed on only one of outer surfaces of the first substrate 110 and the second substrate 120. For example, the optically clear adhesive layer and the reinforcing plate may be provided only on the front surface of the second substrate 120 which is positioned to be near a user who sees the display screen among the first substrate 110 and the second substrate 120.

The optically clear adhesive layers 191 and 193 may be formed of a conventional optically clear adhesive or may be an optically clear adhesive of a tape type or liquid optically adhesive (LOCA). In case that the optically clear adhesive layers 191 and 193 are formed of an optically clear adhesive of a tape type, after the optically clear adhesive layers 191 and 193 are formed on the outer surfaces of the polarizers 170, the reinforcing plates 140 and 150 are attached thereon. Meanwhile, in case that the optically clear adhesive layers 191 and 193 are formed of liquid optically clear adhesive, the manufacturing process may be altered depending on viscosity of liquid optically clear adhesive, and for example, if viscosity of the liquid optically clear adhesive is relatively large, the reinforcing plates 140 and 150 may be attached after the optically clear adhesive layers 191 and 193 are formed on the polarizers 170, and if viscosity of the liquid optically clear adhesive is relatively small, in a state that the reinforcing plates 140 and 150 are positioned outside the substrates 110 and 120, liquid optically clear adhesive is filled with a space between the reinforcing plates 140 and 150 and the substrates 110 and 120 to form the optically clear adhesive layers 191 and 193.

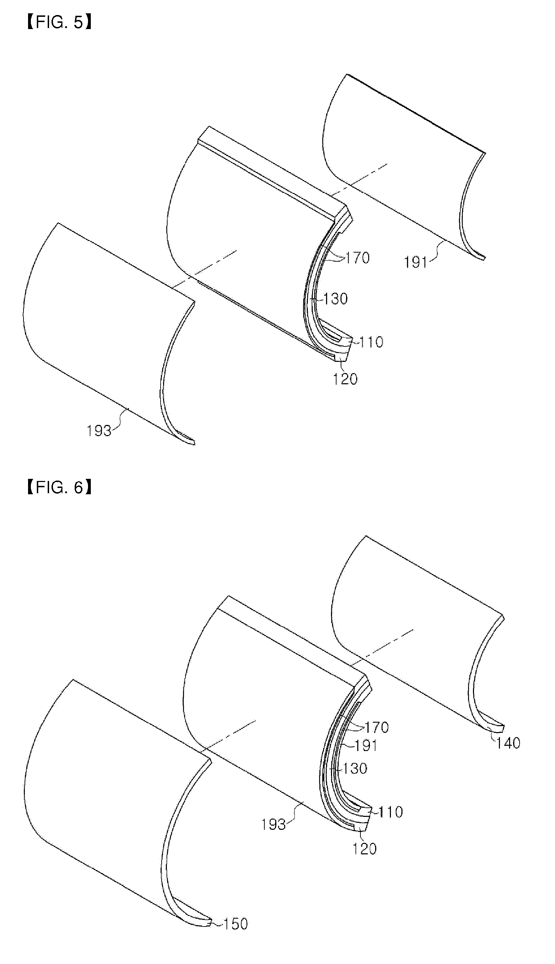

Further, referring to FIG. 6, the reinforcing plates 140 and 150 are adhered using the optically clear adhesive layers 191 and 193 in a state that the display panel 100a is bent to a desired curved-surface shape so as to be attached to the display panel 100a.

The reinforcing plates 140 and 150 may be formed of material having a good light transmitting characteristics, for example materials such as glass or PMMA(PolyMethly MethAcrylate). At this time, the reinforcing plates 140 and 150 may have the same curved shape with the desired curved shape of the curved-surface display panel, and may have strength to maintain the curved shape. As such, after paring outer surfaces of the conventional flat liquid crystal display panel to be flexible and bending the same in a desired curve shape, by attaching the reinforcing plates 140 and 150 having the same curve shape onto the outer surfaces of the bent liquid crystal panel 100a, the curved-surface display panel having the desired curved shape can be formed. Meanwhile, the polarizer 170 which is attached to the display panel may provide a force to maintain the curved state.

Meanwhile, not shown in the drawing, an anti-reflective coating may be formed on an outer surface of the reinforcing plate 150 to improve the display characteristics.

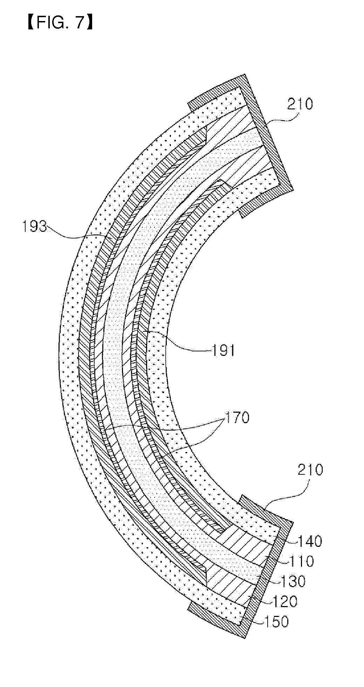

Meanwhile, referring to FIG. 7, a method for manufacturing a curved-surface display according to another embodiment of the present invention may further include a protecting edge cover 210 which covers edges of the first substrate 110 and the second substrate 120. The protecting edge cover 210 may be formed to cover partially edges of the first substrate 110 and the second substrate 120. By the protecting edge cover 210, an overall strength can be increased and the curved-surface display panel can be protected, and the display can be sealed by the protecting edge cover 210 from the outside. For example, the protecting edge cover 210 may be formed by curing ultraviolet-curable resin, resin which is curable under room temperature, or the like.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [Industrial Applicability]

The present invention relates to a display manufacturing method and can be applied to a manufacturing method of display panels, so that present invention has an industrial applicability.

## Claims

1. A method for manufacturing a curved-surface display having a desired curved shape using a flat display panel having a first substrate and a second substrate, comprising:
paring partially outer surfaces of the first substrate and the second substrate so as to reduce thicknesses thereof to a predetermined thickness;
attaching a polarizer on at least one of the pared outer surfaces of the first substrate and the second substrate; and
attaching a reinforcing plate having the same shape with the desired curved shape and light transmitting characteristics to the display panel using an optically clear adhesive layer which is formed on an outer surface of the polarizer so as to fill the pared portion.

2. The method for manufacturing a curved-surface display of claim 1, further comprising forming a protecting edge cover which covers edges of the first substrate and the second substrate.
